# FASCICULE DE BREVET EUROPEEN

(11) **EP 2 045 555 B1**
(45) Date de publication et mention de la délivrance du brevet: **01.01.2014**
(21) Numéro de dépôt: 08163644.1
(22) Date de dépôt: 04.09.2008
(51) Int. Cl.: F28D 7/10

(54) **Echangeur thermique de préchauffage pour pile à combustible**
Wärmetauscher zum Aufwärmen einer Brennstoffzelle
Heat exchanger to pre-heat a fuel cell

(30) Priorité: 01.10.2007 FR 0757975
(43) Date de publication de la demande: 08.04.2009
(73) Titulaire: SNECMA, 75015 Paris (FR)
(72) Inventeur: Indersie, Dominique, 27200, Vernon (FR); Loevenbruck, Côme, 27200, Vernon (FR)
(74) Mandataire: Desormiere, Pierre-Louis

(56) Documents cités:
- DE-A1- 4 402 466
- US-A- 4 096 616
- US-A1- 2004 089 438

## Description

### Domaine de l'invention

La présente concerne le domaine des échangeurs thermiques permettant de réchauffer un premier fluide par échangeur de chaleur avec un second fluide. L'invention concerne plus particulièrement les échangeurs thermiques hautes températures utilisés avec des piles à combustible. Un échangeur correspondant au préambule de la revendication 1 est divulgué par le document DE 4402466 A1.

### Arrière plan de l'invention

Les piles à combustible du type à oxyde solide, couramment appelée SOFC (pour "Solid Oxid Fuel Cell") mettent en oeuvre une réaction d'oxydoréduction électrochimique avec production simultanée d'électricité. Les électrodes de la pile doivent être alimentées respectivement avec un combustible, en général de l'hydrogène, et avec un comburant pour l'autre, à savoir de l'oxygène. En pratique, l'alimentation en oxygène de la pile est réalisée par introduction d'un flux d'air dans le coeur de pile.

Une pile à combustible SOFC a une température de fonctionnement élevée, de l'ordre de 900°C à 1000°C. Toutefois, l'air utilisé pour alimenter la pile en oxygène doit être préalablement chauffé à une température relativement proche de celle de fonctionnement de la pile avant d'être introduit dans cette dernière.

A cet effet, on utilise un échangeur thermique avec la pile à combustible proprement dite qui permet de préchauffer l'air avant son introduction dans le coeur de pile. Il existe actuellement un grand nombre d'échangeurs thermiques fonctionnant à des températures relativement basses. En revanche, les échangeurs thermiques qui utilisent des gaz très hautes températures aux environs de 900°C sont peu nombreux. Des échangeurs thermiques hautes températures pour piles à combustible SOFC sont notamment décrits dans les documents US 2005/0249991 et US 2005/0089731. Cependant, certains éléments constitutifs de ces échangeurs se dilatent fortement sous l'effet des températures élevées. Ces dilatations thermiques, qui en outre ne sont pas uniformes en raison de la présence de gradients de température entre l'entrée et la sortie des circuits d'échange de chaleur, engendrent des contraintes mécaniques importantes entre les pièces et sur l'ensemble de la structure de l'échangeur qui peuvent conduire à des déformations irréversibles. Pour éviter des dilatations thermiques trop importantes, une première solution consiste à utiliser des matériaux ayant de faibles coefficients de dilatation thermique (par exemple des matériaux céramiques). Toutefois, ces matériaux sont coûteux à fabriquer. Une autre solution pour palier les problèmes de dilatations thermiques consiste à proposer des conceptions spécifiques d'échangeur qui sont relativement complexes tant au niveau de leur fabrication que de leur fonctionnement. En outre, dans les conceptions proposées jusqu'ici, les échanges thermiques entre le flux d'air à préchauffer et la source de chaleur ne sont pas optimisés en particulier en raison de la présence de zones de pertes thermiques qui conduisent à des échanges thermiques parasites dans l'échangeur.

### Objet et résumé de l'invention

La présente invention a pour but de proposer une structure d'échangeur thermique hautes températures, notamment pour pile à combustible, dont la conception permet de limiter les contraintes mécaniques dues aux dilatations thermiques tout en utilisant des matériaux standards tels que des matériaux métalliques. La présente invention vise également à proposer une structure d'échangeur simple à réaliser, ayant une durée de vie importante et dans laquelle les échanges de chaleur sont optimisés.

A cet effet, la présente invention propose un échangeur thermique comportant un premier circuit de circulation destiné à recevoir un fluide froid et un deuxième circuit de circulation destiné à recevoir un fluide chaud, les premier et deuxième circuits de circulation comportant des surfaces communes d'échange de chaleur, caractérisé en ce que les premier et deuxième circuits de circulation comprennent chacun une pluralité de conduits annulaires concentriques reliés entre eux et en ce que les deux parois de chaque conduit sont découplées mécaniquement l'une de l'autre.

Ainsi, en découplant mécaniquement les parois de chaque conduit de l'échangeur, ces dernières peuvent se dilater indépendamment les unes des autres, ce qui permet d'éviter des contraintes mécaniques dans l'échangeur. En minimisant les efforts mécaniques dans l'échangeur lors de son fonctionnement, on augmente sa durée de vie et on empêche l'apparition de déformation dans sa structure.

En outre, grâce au découplage mécanique entre les parois des conduits qui permet de limiter les conséquences des dilatations thermiques dans l'échangeur, il n'est plus nécessaire d'utiliser des matériaux coûteux à faible coefficient de dilatation thermique. L'échangeur thermique selon l'invention peut donc être fabriqué avec des matériaux standards tels que des matériaux métalliques qui permettent de réaliser l'échangeur avec des technologies de formage (pliage, cintrage, etc.) et d'assemblage (soudure, boulonnerie, etc.) simples et peu coûteuses.

Selon un aspect de l'invention, une des deux parois de chaque conduit comporte une extrémité libre, cette paroi pouvant se dilater librement notamment dans le sens axial sans exercer de contraintes mécaniques sur d'autres parties de l'échangeur.

Selon un autre aspect de l'invention, l'échangeur présente dans le sens radial une alternance successive de deux conduits annulaires adjacents appartenant au premier circuit de circulation du fluide froid et deux conduits annulaires adjacents appartenant au deuxième circuit de circulation du fluide chaud, deux conduits annulaires adjacents formant une chicane de distribution pour le fluide froid ou le fluide chaud. Cette disposition des conduits annulaires permet de distribuer le fluide froid et le fluide chaud dans chaque circuit de circulation de l'échangeur par simple retournement en bout de chicane, et ce sans utilisation de moyens de distribution supplémentaires qui complexifient la conception de l'échangeur et empêchent l'optimisation des échanges thermiques. Avec cette conception, il est en outre possible de réaliser un échangeur thermique compact qui peut être intégré facilement dans des logements de faibles dimensions.

Selon un mode de réalisation particulier, au moins un côté de chaque paroi commune à deux conduits adjacents appartenant au premier ou au deuxième circuit de circulation comprend une couche d'isolant thermique. En isolant tout ou partie des chicanes formées par deux conduits adjacents, on évite d'éventuels échanges thermiques parasites dans un même fluide, ce qui permet d'éviter des blocages thermiques et de favoriser encore l'échange de chaleur entre le fluide chaud et le fluide froid dans l'échangeur.

L'échangeur peut comprendre en outre des plots d'écartement disposés entre les parois des conduits annulaires des premier et deuxième circuits de circulation.

Selon un mode de réalisation particulier, l'échangeur comprend en outre une première couche de matériau d'isolation thermique disposée autour de la périphérie externe dudit échangeur et une deuxième couche de matériau d'isolation thermique disposée sur la partie supérieure dudit échangeur.

Selon un autre mode de réalisation particulier, l'échangeur comprend en outre un premier conduit s'étendant sur toute la périphérie externe dudit échangeur thermique et un deuxième conduit s'étendant sensiblement sur la partie supérieure dudit échangeur de manière à former un circuit de refroidissement autour dudit échangeur. Dans ce cas, la partie du circuit de refroidissement située à proximité de la partie supérieure de l'échangeur est découplée thermiquement au moyen d'une couche d'isolant thermique.

Les performances de l'échangeur thermique selon l'invention sont facilement adaptables en fonction du niveau des échanges thermiques désirés. En effet, la longueur des premier et second circuits de circulation, et, par conséquent, la taille des surfaces d'échange de chaleur, sont fonction du nombre et/ou de la hauteur des conduits annulaires.

La présente invention concerne également un dispositif de pile à combustible comprenant une pile à combustible à oxyde solide caractérisé en ce qu'il comprend en outre un échangeur thermique tel que décrit précédemment, l'échangeur comportant un logement central dans lequel est disposée ladite pile, le premier circuit de circulation dudit échangeur étant apte à alimenter la pile à combustible avec un flux d'air frais préchauffé et le deuxième circuit de circulation dudit échangeur étant apte à évacuer un flux d'air appauvri chaud issu de la pile à combustible, le flux d'air frais étant préchauffé par échange de chaleur avec le flux d'air appauvri dans ledit échangeur.

On obtient ainsi, un dispositif de pile à combustible avec un échangeur thermique disposé concentriquement à la pile à oxyde solide, la partie la plus chaude de l'échangeur, à savoir celle recevant en entrée le flux d'air appauvri chaud issu de la pile, se trouvant au centre tandis que la partie la plus froide, à savoir celle recevant en entrée le flux d'air frais à préchauffer, se trouvant sur la périphérie externe de l'échangeur. L'échangeur thermique forme ainsi une première isolation thermique entre la pile et l'extérieur.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en coupe et en perspective d'un mode de réalisation d'un dispositif de pile à combustible intégrant un échangeur thermique conforme à l'invention;
- la figure 2 est vue éclatée en perspective montrant les éléments constitutifs de l'échangeur thermique de la figure 1,
- la figure 3 est vue éclatée en perspective montrant les éléments constitutifs du dispositif de pile à combustible de la figure 1,
- la figure 4 est une vue schématique en demi coupe du dispositif de pile à combustible de la figure 1,
- les figures 4A et 4B sont des vues de détail du dispositif de pile à combustible de la figure 4,
- la figure 5 est une vue en perspective d'un autre mode de réalisation d'un dispositif de pile à combustible intégrant un échangeur thermique conforme à l'invention.

### Description détaillée d'un mode de réalisation

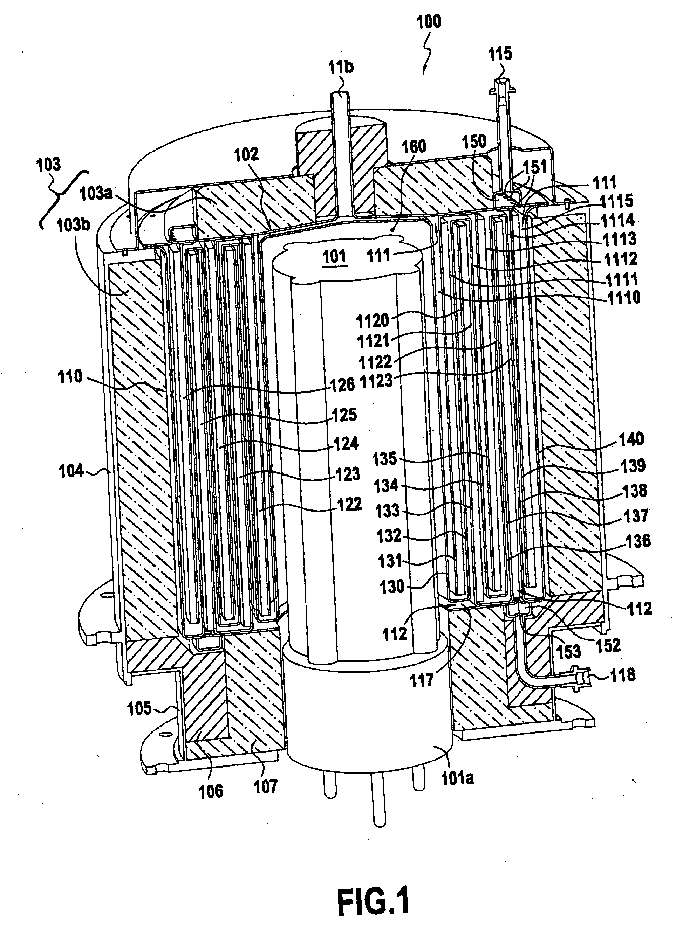

La figure 1 montre un dispositif 100 de pile à combustible intégrant un échangeur thermique 110 conformément à un mode de réalisation de l'invention.

Le dispositif 100 comprend une pile à combustible 101 du type à oxyde solide, couramment appelée SOFC (pour "Solid Oxid Fuel Cell"). La structure et le fonctionnement de ce type de pile à combustible sont bien connus et ne seront pas décrits plus en détail par souci de simplification. Indépendamment de la structure interne de la pile SOFC utilisée, le dimensionnement de l'échangeur thermique selon l'invention, tant sur le plan géométrique que thermique, est défini en fonction de l'encombrement externe de la pile à intégrer ainsi que de la température de la pile elle-même et surtout de l'air appauvri chaud rejeté par la pile. En effet, l'air chaud appauvri dans la pile est rejeté autour de celle-ci, c'est-à-dire dans l'espace présent entre la surface externe de la pile et la surface interne de l'échangeur.

La température de fonctionnement d'une pile SOFC se situe autour de 900°C. Le flux d'air utilisé pour alimenter la pile doit, par conséquent, être réchauffé avant d'être introduit dans la pile. A cet effet, le dispositif 100 de pile à combustible comprend, conformément à la présente invention, un échangeur thermique 110 qui permet de préchauffer l'air destiné à l'alimentation de la pile jusqu'à une température proche de la température de fonctionnement de la pile, par exemple 700°C environ.

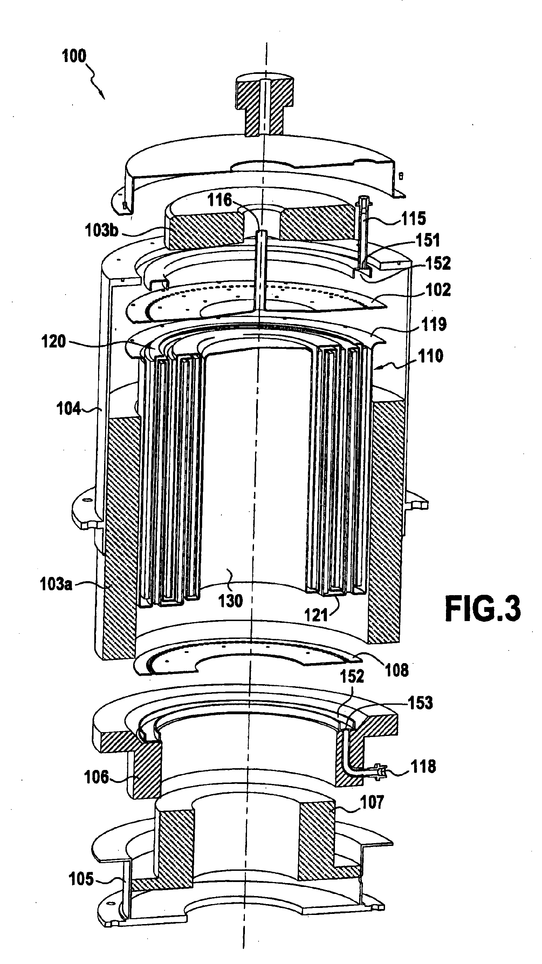

Comme illustré dans les figures 1 et 3, la partie supérieure de l'échangeur est fermée par un flasque de capotage 102. Dans le mode de réalisation présenté ici, l'isolation thermique entre le dispositif de pile à combustible et l'extérieur est réalisée par une enveloppe isolante 103 comprenant une première couche d'un matériau d'isolation thermique 103a disposée entre un carter structural 104 et l'échangeur thermique 110 ainsi qu'une deuxième couche de matériau d'isolation thermique 103b disposée sur la partie supérieure de l'échangeur de manière à protéger un utilisateur des éventuels risques de brûlures au contact du dispositif. Le carter structural 104, qui permet le maintien en place de la couche isolante 103a et la protection du dispositif contre les chocs extérieurs est fixé sur un socle 105 servant à la fixation du dispositif sur un support. Le volume interne libre du socle 105 autour de la pile à combustible 101 est rempli par des isolants thermiques 106 et 107.

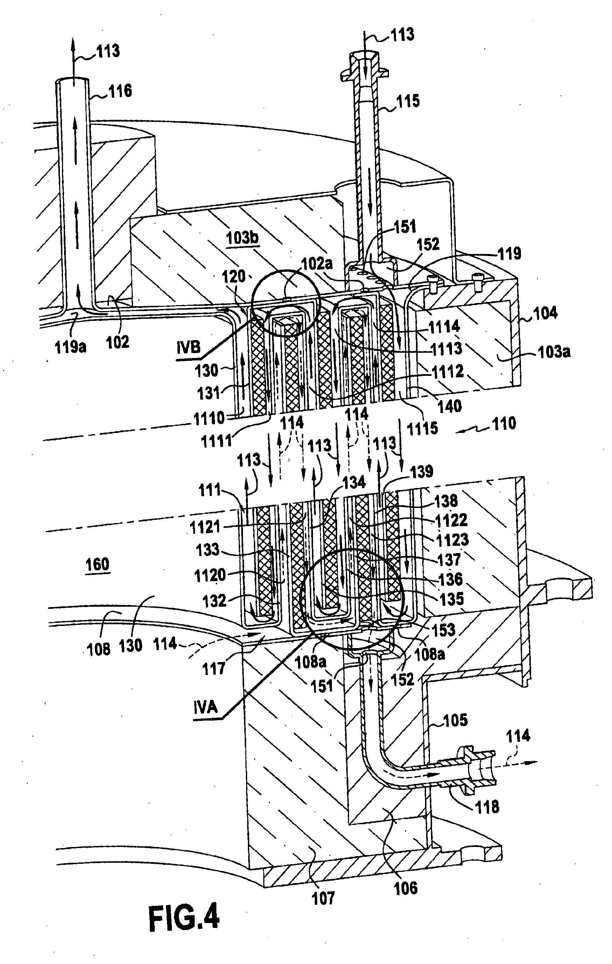

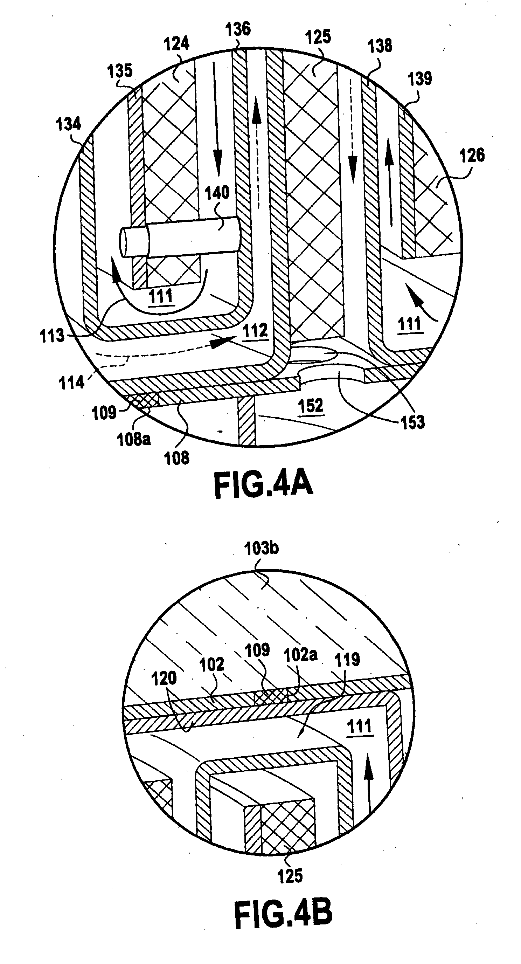

Comme représenté sur les figures 1 et 4, l'échangeur thermique 110 présente une forme générale sensiblement cylindrique avec un évidement central formant un logement 160 pour la pile à combustible 101. La base 101a de la pile 101 assure, par exemple avec un système de joints (non représenté), l'étanchéité entre le logement 160 et l'extérieur de l'échangeur de manière à canaliser l'air chaud rejeté par la pile dans le conduit de circulation 112 de l'échangeur.

L'échangeur thermique 110 comprend une pluralité de parois circulaires 130 à 140 disposées concentriquement de manière à délimiter deux circuits de circulation 111 et 112 séparés. Le premier circuit de circulation 111, qui a pour fonction de préchauffer le flux d'air frais 113 destiné à alimenter la pile en oxygène, est formé d'une pluralité de conduits annulaires 1110 à 1115 concentriques. Les conduits annulaires 1110 à 1115 sont reliés en série alternativement par leur portion inférieure et par leur portion supérieure de manière à définir un chemin de circulation optimal du flux d'air frais dans l'échangeur entre une entrée d'air frais 115 et une sortie d'air frais préchauffé 116. Le flux d'air frais introduit dans l'échangeur par l'entrée d'air frais 115 est distribué de façon annulaire dans le conduit 1115 au moyen d'une gorge annulaire 150 et via des perforations 151 ménagées dans le flasque de capotage 102 et réparties tout le long de cette gorge. L'air préchauffé collecté au niveau de la sortie d'air frais préchauffé 116 est ensuite introduit dans la pile à combustible 101 via un circuit spécifique (non représenté sur la figure 1).

Le deuxième circuit de circulation 112 a pour fonction de refroidir le flux d'air appauvri 114 issu de la pile à combustible 101 par échange de chaleur avec le flux d'air frais 113. Le deuxième circuit de circulation 112 est formé d'une pluralité de conduits annulaires 1120 à 1123 concentriques. Les conduits annulaires 1120 à 1123 sont reliés en série alternativement par leur portion supérieure et par leur portion inférieure entre une entrée d'air appauvri 117 issu de la pile et une sortie d'air appauvri 118 de l'échangeur thermique 110. Le flux d'air appauvri 114 issu de la pile est introduit de façon annulaire dans l'échangeur par l'entrée d'air appauvri 117 qui se situe au niveau de la portion inférieure du conduit 1120. Le flux d'air appauvri est ensuite évacué de l'échangeur également de façon annulaire à partir du conduit 1123 au moyen d'une gorge annulaire 152 coopérant avec la sortie d'air appauvri 118 et le conduit 1123 via des perforations 153 ménagées sur une plaque annulaire 108 et réparties tout le long de la gorge. L'air appauvri refroidi collecté au niveau de la sortie d'air appauvri 118 est utilisé pour le fonctionnement d'une chaudière (non représentée sur la figure 1).

Bien que l'échangeur thermique représenté sur les figures 1 et 4 comprend 6 conduits pour le flux d'air frais et 4 conduits pour le flux d'air appauvri, l'échangeur thermique selon l'invention n'est absolument pas limité à ces nombres de conduits. En effet, en fonction des besoins en termes d'échange thermique, l'homme du métier saura sans difficultés adapter (augmenter ou réduire) le nombre des conduits nécessaires à l'échange thermique visé.

Conformément à la présente invention, les parois de chaque conduit annulaire 1110 à 1115 et 1120 à 1123 sont découplées mécaniquement. Par exemple, le conduit annulaire 1110 est délimité par les deux parois 130 et 131 qui appartiennent respectivement à des pièces mécaniquement indépendantes. De même, le conduit 1120 est délimité par deux parois 132 et 133 qui sont découplées mécaniquement. Il en est de même pour tous les autres conduits de l'échangeur.

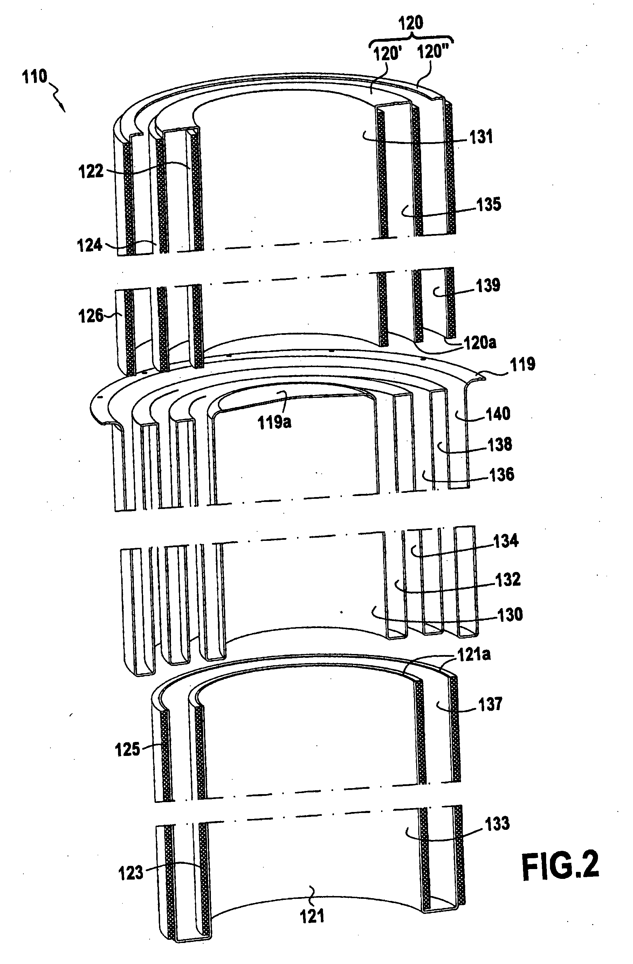

Dans le mode de réalisation présenté dans la figure 1, les conduits 1110 à 1115 et 1120 à 1123 sont réalisés par emboîtement de trois pièces annulaires 119, 120 et 121 comme illustré sur la figure 2. Les pièces 119, 120 et 121 sont réalisées par pliage et cintrage de tôles en matériau métallique, par exemple en Inconel® 625. La pièce 120, qui est constituée de deux sous éléments 120' et 120", comporte trois parois verticales annulaires concentriques destinées à être emboîtées dans la pièce 119 pour constituer les parois 131, 135 et 139 de l'échangeur. De même, la pièce 121 comporte deux parois verticales annulaires concentriques destinées à être emboîtées dans la pièce 119 pour constituer les parois 133 et 137 de l'échangeur.

Lorsqu'elle est emboîtée dans la pièce 119, la pièce 120 forme des obstacles pour le flux d'air appauvri 114 issu de la pile à combustible circulant entre l'entrée d'air appauvri 117 et la sortie d'air appauvri 118. De même, une fois emboîtée dans la pièce 119, la pièce 121 forme des obstacles que le flux d'air frais 113 doit contourner lorsqu'il circule entre l'entrée d'air frais 115 et la sortie d'air frais préchauffé 116. Les pièces 119, 120 et 121 n'étant pas reliées les unes aux autres, toutes les parois adjacentes deux à deux de l'échangeur sont découplées mécaniquement.

Ainsi, les dilatations différentielles présentes dans l'échangeur, en raison de la différence de température entre le centre de l'échangeur très chaud en raison de la proximité de la pile et la périphérie de l'échangeur plus froide, n'entraînent pas de contraintes mécaniques importantes sur la structure de l'échangeur puisque les pièces formant les circuits de circulation 111 et 112 ne sont pas solidaires.

Les pièces 119, 120 et 121, et en particulier leur partie qui s'étendent le long de l'axe de révolution de l'échangeur pour former les parois des conduits des circuits de circulation 111 et 112 peuvent se dilater librement, en particulier dans le sens axial. En effet, en ménageant un jeu entre la pièce 119 et les extrémités libres 120a et 121a respectivement des pièces 120 et 121, ainsi qu'un jeu entre la pièce 119 et les éléments environnants du dispositif 100, on permet aux dilations de se développer sans interaction entre les pièces.

L'enceinte centrale de la pièce 119 est fermée dans sa partie supérieure par un cône 119a qui permet d'assurer l'étanchéité entre les circuits de circulation 111 et 112 et de guider le flux d'air frais 113 préchauffé vers la sortie d'air frais préchauffé 116.

Les pièces 120 et 121 sont par exemple fixées respectivement sur la plaque annulaire 108 et le flasque de capotage 102 par une soudure de type "bouchon", c'est-à-dire en remplissant des orifices 102a et 108a ménagés régulièrement sur le flasque 102 et sur la plaque 108 par des plots de soudure ponctuels 109 (figures 4A et 4B).

Comme illustré sur la figure 4, l'échangeur thermique 110 présente dans le sens radial une alternance successive de deux conduits annulaires appartenant au premier circuit de circulation 111 du flux d'air frais 113 et deux conduits annulaires appartenant au deuxième circuit de circulation 112 du flux d'air appauvri 114.

Par conséquent, le même flux, à savoir le flux d'air frais 113 ou le flux d'air appauvri 114, circule de part et d'autre d'une même paroi lorsqu'il circule dans deux conduits annulaires adjacents. Dans ce cas, afin d'éviter les pertes thermiques dans l'échangeur, des couches d'isolant 122 à 126 sont respectivement fixées sur un côté des parois 131, 133, 135, 137 et 139. Ces couches d'isolant empêchent les déperditions de chaleur dans un même flux lors de son passage aller/retour le long d'une paroi, ces déperditions pouvant entraîner un blocage thermique dans l'échangeur. L'échange thermique entre le flux d'air frais 113 à préchauffer et le flux d'air appauvri 114 à refroidir est ainsi favorisé par l'isolation des conduits adjacents dans chaque circuit de circulation 111 et 112. Les couches d'isolant 122 à 125 peuvent être chacune formée d'une couche de mousse isolante et d'un film de quartz collés sur la paroi du conduit à isoler au moyen d'une colle telle que le produit Fixwool® de la société Unifrax. Une collerette peut en outre être placée en extrémité de paroi pour assurer le maintien en place de l'isolant autour de cette dernière.

Afin de maintenir un écartement entre les parois des conduits qui sont découplées mécaniquement, on peut disposer des plots d'écartement ou entretoises entre les parois des conduits. Plus précisément, comme représentées sur la figure 4A, des séries de plots d'écartement 140 peuvent être répartis angulairement entre les parois des conduits 1111, 1121, 1113, 1123 et 1115. Les plots d'écartement sont placés de préférence au voisinage de l'extrémité libre de la paroi de chaque conduit.

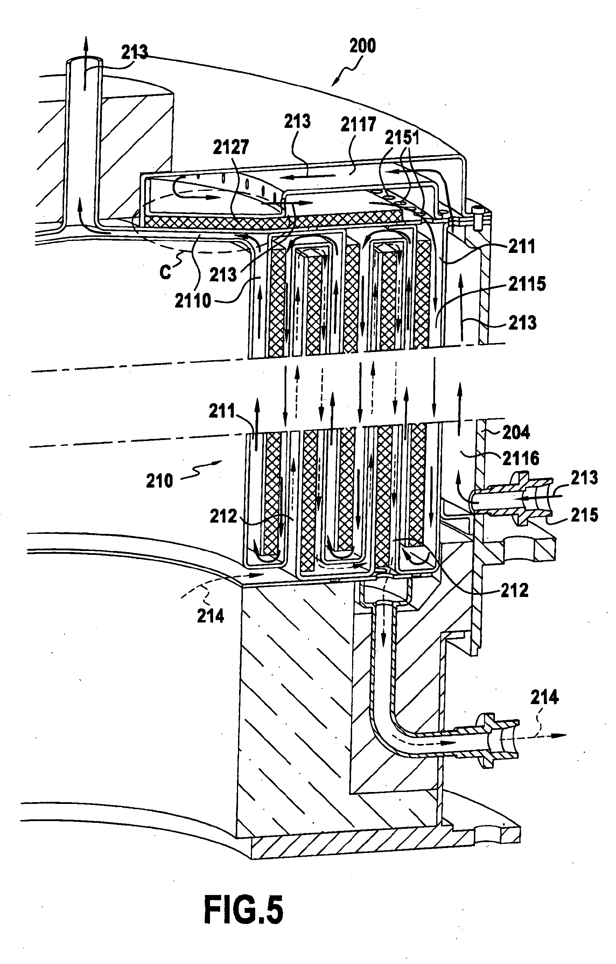

Dans le mode de réalisation présenté dans les figures 1 à 4, l'isolation thermique entre l'échangeur thermique du dispositif et l'extérieur est réalisée par une enveloppe isolante 103 comprenant, d'une part, une première couche de matériau d'isolation thermique 103a disposée entre le carter 104 et l'échangeur thermique 110, et d'autre part une deuxième couche de matériau d'isolation thermique 103b. La figure 5 illustre un autre mode de réalisation du dispositif de pile à combustible 200 qui diffère de celui de la figure 1 en ce que l'isolation thermique avec l'extérieur est assurée par circulation d'un flux d'air froid à la place de l'enveloppe isolante 103. Plus précisément, comme illustré sur la figure 5, le circuit de circulation 211, qui a pour fonction de préchauffer le flux d'air frais 213 avec le flux d'air appauvri chaud 214 issu de la pile circulant dans le circuit de circulation 212, est prolongé en entrée par deux conduits supplémentaires 2116 et 2117. Le conduit 2116 qui coopère avec l'entrée d'air frais 215 du circuit de circulation 211 s'étend sur toute la périphérie externe de l'échangeur thermique 210 et permet par la circulation de l'air frais 213 de former une paroi externe refroidie afin de maintenir le carter 204 à une température suffisamment basse pour éviter les risques de brûlure en cas de manipulation. Le conduit 2116 assure ainsi la fonction d'isolation remplie par le premier isolant 103a dans le mode de réalisation de la figure 1. Le conduit 2117 permet quant à lui, par circulation du flux d'air frais 213 sur la partie supérieure de l'échangeur, de refroidir cette dernière et d'assurer la fonction d'isolation thermique remplie par le deuxième isolant annulaire 103b dans le mode de réalisation de la figure 1. Le conduit 2117 débouche dans le conduit 2115 du circuit de circulation 211 qui correspond au conduit 1115 du circuit de circulation 111 de l'échangeur de la figure 1.

Toutefois, dans ce mode de réalisation, le conduit 2117 dans lequel circule le flux d'air frais 213 à sa température la plus basse (c'est-à-dire avant son réchauffement dans l'échangeur) est très proche du conduit 2110 dans lequel circule le même flux d'air frais 213 mais à sa température la plus haute (c'est-à-dire après avoir été réchauffé dans l'échangeur). Par conséquent, il existe une zone critique C dans laquelle il peut y avoir un pont thermique important entre l'air réchauffé qui quitte l'échangeur et l'air frais qui vient d'être introduit dans l'échangeur. A cet effet, l'échangeur thermique 200 comprend en outre une couche d'isolant thermique 2127 permettant au moins de découpler thermiquement le conduit 2117 du conduit 2110. Comme illustrée sur la figure 5, la couche d'isolant 2127 peut être prolongée jusqu'au voisinage des perforations 2151 qui permettent de distribuer le flux d'air frais 213 dans le premier conduit 2115 du circuit de circulation 211.

Les autres éléments de l'échangeur thermique 210 sont structurellement et fonctionnellement identiques à ceux déjà décrits en relation avec le dispositif de la figure 1.

En fonction des besoins, les performances de l'échangeur thermique de l'invention sont facilement adaptables. En effet, les performances sont réglées en ajustant la longueur du circuit d'échange thermique par allongement ou réduction des conduits des circuits de circulation et/ou par augmentation ou réduction du nombre de conduits des circuits de circulation.

## Revendications

1. Echangeur thermique (110) comportant un premier circuit de circulation (111) destiné à recevoir un fluide froid (113) et un deuxième circuit de circulation (112) destiné à recevoir un fluide chaud (114), les premier et deuxième circuits de circulation comportant des surfaces communes d'échange de chaleur, les premier et deuxième circuits de circulation (111, 112) comprenant chacun une pluralité de conduits annulaires concentriques (1110-1115; 1120-1123) reliés entre eux, les deux parois de chaque conduit étant découplées mécaniquement l'une de l'autre,
l'échangeur présentant dans le sens radial une alternance successive de deux conduits annulaires adjacents (1110, 1111; 1112, 1113; 1114, 1115) appartenant au premier circuit de circulation (111) du fluide froid (113) et deux conduits annulaires adjacents (1120, 1121; 1122, 1123) appartenant au deuxième circuit de circulation (112) du fluide chaud (114), deux conduits annulaires adjacents formant une chicane de distribution pour le fluide froid ou le fluide chaud,
**caractérisé en ce qu'**au moins un côté de chaque paroi (131; 133; 135; 137; 139) commune à deux conduits adjacents appartenant audit premier ou audit deuxième circuit de circulation (111; 112) comprend une couche d'isolant thermique (122; 123; 124; 125; 126).

2. Echangeur selon la revendication 1, **caractérisé en ce qu'**une des deux parois (131; 133; 135; 137; 139) de chaque conduit comporte une extrémité libre.

3. Echangeur selon la revendication 1 ou 2, **caractérisé en ce qu'**il comprend en outre des plots d'écartement (140) disposés entre les parois des conduits annulaires (1110-1115, 1120-1123) des premier et deuxième circuits de circulation (111, 112).

4. Echangeur selon l'une quelconque des revendications 1 à 3, **caractérisé en ce qu'**il comprend en outre une première couche de matériau d'isolation thermique (103a) disposée autour de la périphérie externe dudit échangeur (110) et une deuxième couche de matériau d'isolation thermique (103b) disposée sur la partie supérieure dudit échangeur (110).

5. Echangeur selon l'une quelconque des revendications 1 à 3, **caractérisé en ce qu'**il comprend en outre un premier conduit (2116) s'étendant sur toute la périphérie externe dudit échangeur thermique (210) et un deuxième conduit (2117) s'étendant sensiblement sur la partie supérieure dudit échangeur de manière à former un circuit de refroidissement autour dudit échangeur.

6. Echangeur selon l'une quelconque des revendications 1 à 5, **caractérisé en ce que** la longueur desdits premier et second circuits de circulation (111, 112) est fonction du nombre et/ou de la hauteur des conduits annulaires (1110-1115, 1120-1123).

7. Dispositif de pile à combustible (100; 200) comprenant une pile à combustible (101) à oxyde solide **caractérisé en ce qu'**il comprend en outre un échangeur thermique (110; 210) selon l'une quelconque des revendications 1 à 6, ledit échangeur comportant un logement central dans lequel est disposée ladite pile, le premier circuit de circulation (111; 211) dudit échangeur étant apte à alimenter la pile à combustible avec un flux d'air frais préchauffé (113; 213) et le deuxième circuit de circulation (112; 212) dudit échangeur étant apte à évacuer un flux d'air appauvri chaud (114; 214) issu de la pile à combustible, le flux d'air frais (113; 213) étant préchauffé par échange de chaleur avec le flux d'air appauvri (114; 214) dans ledit échangeur.

## Patentansprüche

1. Wärmetauscher (110), umfassend einen ersten Zirkulationskreis (111), der dazu bestimmt ist, ein kaltes Fluid (113) aufzunehmen, sowie einen zweiten Zirkulationskreis (112), der dazu bestimmt ist, ein heißes Fluid (114) aufzunehmen, wobei der erste und der zweite Zirkulationskreis gemeinsame Wärmeaustauschflächen umfassen, wobei der erste und der zweite Zirkulationskreis (111, 112) jeweils eine Vielzahl von untereinander verbundenen konzentrischen Ringleitungen (1110-1115; 1120-1123) umfassen, wobei die beiden Wandungen einer jeden Leitung mechanisch voneinander entkoppelt sind,
wobei der Tauscher in radialer Richtung einen aufeinanderfolgenden Wechsel von zwei benachbarten Ringleitungen (1110, 1111; 1112, 1113; 1114, 1115), die zu dem ersten Zirkulationskreis (111) des kalten Fluids (113) gehören, und von zwei benachbarten Ringleitungen (1120, 1121; 1122, 1123), die zu dem zweiten Zirkulationskreis (112) des heißen Fluids (114) gehören, aufweist, wobei zwei benachbarte Ringleitungen ein Verteilungsleitblech für das kalte Fluid oder das heiße Fluid bilden,
**dadurch gekennzeichnet, daß** wenigstens eine Seite jeder Wandung (131; 133; 135; 137; 139), die zwei zu dem ersten oder zu dem zweiten Zirkulationskreis (111; 112) gehörenden benachbarten Leitungen gemein ist, eine Wärmeisolationsschicht (122, 123; 124; 125; 126) umfaßt.

2. Tauscher nach Anspruch 1, **dadurch gekennzeichnet, daß** eine der beiden Wände (131; 133; 135; 137; 139) einer jeden Leitung ein freies Ende umfaßt.

3. Tauscher nach Anspruch 1 oder 2, **dadurch gekennzeichnet, daß** er ferner Abstandsstifte (140) umfaßt, die zwischen den Wandungen der Ringleitungen (1110-1115, 1120-1123) des ersten und des zweiten Zirkulationskreises (111, 112) angeordnet sind.

4. Tauscher nach einem der Ansprüche 1 bis 3, **dadurch gekennzeichnet, daß** er ferner eine erste Schicht aus Wärmeisolationsmaterial (1 03a), die um den Außenumfang des Tauschers (110) angeordnet ist, und eine zweite Schicht aus Wärmeisolationsmaterial (1 03b), die an dem oberen Teil des Tauschers (110) angeordnet ist, umfaßt.

5. Tauscher nach einem der Ansprüche 1 bis 3, **dadurch gekennzeichnet, daß** er ferner eine erste Leitung (2116), die sich über den gesamten Außenumfang des Wärmetauschers (210) erstreckt, sowie eine zweite Leitung (2117), die sich im wesentlichen über den oberen Teil des Tauschers erstreckt, um einen Kühlkreis um den Tauscher zu bilden, umfaßt.

6. Tauscher nach einem der Ansprüche 1 bis 5, **dadurch gekennzeichnet, daß** die Länge des ersten und des zweiten Zirkulationskreises (111, 112) von der Anzahl und/oder von der Höhe der Ringleitungen (1110-1115, 1120-1123) abhängig ist.

7. Brennstoffzellenvorrichtung (100; 200), umfassend eine Festoxid-Brennstoffzelle (101), **dadurch gekennzeichnet, daß** sie ferner einen Wärmetauscher (110; 210) nach einem der Ansprüche 1 bis 6 umfaßt, wobei der Tauscher eine mittlere Aufnahme umfaßt, in der die Zelle angeordnet ist, wobei der erste Zirkulationskreis (111; 211) des Tauschers geeignet ist, die Brennstoffzelle mit einem Strom vorgewärmter Frischluft (113; 213) zu beaufschlagen, und wobei der zweite Zirkulationskreis (112; 212) des Tauschers geeignet ist, einen aus der Brennstoffzelle kommenden Strom heißer abgereicherter Luft abzuführen, wobei der Frischluftstrom (113; 213) durch Wärmeaustausch mit dem Strom abgereicherter Luft (114; 214) in dem Tauscher vorgewärmt wird.

## Claims

1. A heat exchanger (110) comprising a first flow circuit (111) for receiving a cold fluid (113) and a second flow circuit (112) for receiving a hot fluid (114), the first and second flow circuits having common surfaces for heat exchange, the first and second flow circuits (111, 112) each comprising a plurality of interconnected concentric annular ducts (1110-1115; 1120-1123), the two walls of each duct being mechanically decoupled from each other;
the heat exchanger presenting in the radial direction an alternating succession of pairs of adjacent annular ducts (1110, 1111; 1112, 1113; 1114, 1115) belonging to the first flow circuit (111) for the cold fluid (113) and pairs of adjacent annular ducts (1120, 1121; 1122, 1123) belonging to the second flow circuit (112) for the hot fluid (114), two adjacent annular ducts forming a distribution baffle for the cold fluid or the hot fluid;
wherein at least one side of each wall (131; 133; 135; 137; 139) common to two adjacent ducts belonging to said first or to said second flow circuit (111; 112) includes a layer of thermal insulation (122; 123; 124; 125; 126).

2. A heat exchanger according to claim 1, wherein one of the two walls (131; 133; 135; 137; 139) of each duct includes a free end.

3. A heat exchanger according to claim 1 or 2, including spacer studs (140) disposed between the walls of the annular ducts (1110-1115, 1120-1123) of the first and second flow circuits (111, 112).

4. A heat exchanger according to any one of claims 1 to 3, including a first layer of thermal insulation material (103a) placed around the outer periphery of said heat exchanger (110) and a second layer of thermal insulation material (103b) placed on the top portion of said heat exchanger (110).

5. A heat exchanger according to any one of claims 1 to 3, including a first duct (2116) extending over the entire outer periphery of said heat exchanger (210), and a second duct (2117) extending substantially over the top portion of said heat exchanger so as to form a cooling circuit around said heat exchanger.

6. A heat exchanger according to any one of claims 1 to 5, wherein the lengths of said first and second flow circuits (111, 112) are a function of the number and/or the height of the annular ducts (1110-1115, 1120-1123).

7. A fuel cell device (100; 200) comprising a solid oxide fuel cell (101) and further comprising a heat exchanger (110; 210) according to any one of claims 1 to 6, said heat exchanger including a central recess in which said cell is placed, the first flow circuit (111; 211) of said heat exchanger being suitable for feeding the fuel cell with a flow of preheated cool air (113; 213), and the second flow circuit (112; 212) of said heat exchanger being suitable for exhausting a flow of hot depleted air (114; 214) coming from the fuel cell, the cool air stream (113; 213) being preheated by exchanging heat with the depleted air stream (114; 214) in said heat exchanger.
